# EUROPEAN PATENT SPECIFICATION

(11) **EP 1 673 909 B1**
(45) Date of publication and mention of the grant of the patent: **14.08.2013**
(21) Application number: 04784190.3
(22) Date of filing: 16.09.2004
(51) Int. Cl.: H04B 3/54, H04L 12/28, H04L 1/00

(54) **COMMUNICATION PROTOCOL OVER POWER LINE COMMUNICATION NETWORK**
KOMMUNIKATIONSPROTOKOLL ÜBER EIN STROMLEITUNGS-KOMMUNIKATIONSNETZ
PROTOCOLE DE COMMUNICATION SUR DES RESEAUX DE COMMUNICATION PAR LIGNES ELECTRIQUES

(30) Priority: 19.09.2003 US 666852; 06.10.2003 US 679947
(43) Date of publication of application: 28.06.2006
(73) Proprietor: Satius, Inc., Las Vegas, NV 89130 (US)
(72) Inventor: LAZAR, Sashi, Silver Spring, MD 20905 (US); FISCH, James, Columbia, MD 21045 (US); REINERT, Christopher, L., Plano, TX 75093 (US); ABRAHAM, Charles, Clarksville, MD 21029 (US)
(74) Representative: WSL Patentanwälte Partnerschaftsgesellschaft
(86) International application number: PCT/US2004/030241
(87) International publication number: WO 2005/029710

(56) References cited:
- EP-A- 0 593 380
- EP-A- 0 852 419
- WO-A2-02/087104
- US-A1- 5 812 557
- US-A1- 2001 048 692
- US-A1- 2003 090 368
- US-B1- 6 404 773
- US-B1- 6 459 692

## Description

A Communication System for communication information over a power line grid

EP 0 593 380 A1 discloses the use of a cable television cable for distribution of communication signals for control and monitoring of home automation. There are provided individual units which are able to communicate with a central collective module. This system requires a television cable for communication.

It is the object of the invention to provide an improved communication system for communication information over a power line grid. This object is achieved by a communication system having the features defined in claim 1, Preferred embodiments are defined in the subclaims.

BACKGROUND OF THE INVENTION

The present invention relates generally to power line communication networks, and more particularly the protocols used for cabling and transmitting information over electrical power lines.

Typically, a power line communication network (PLC) is composed of two components. The first component is the Wide-Area Power Line Network (WPLN), which is the communication infrastructure that provides transmission of data between the utility substations and customer premise equipment typically located at, or near by, an electric power meter at a customer premise. The second component of the power line communication network is the Local Area Power Line Network (LPLN), which is the communication infrastructure located at the customer premise.

The components of the power line communication network provide one or more a bi-directional communication channels. Each channel is a point-to-point link between a transmitter/receiver pair at one end of a transmission medium, a physical medium which transmits electrical signals, and a second transmitter/receiver pair at a distant end of the transmission medium. To implement a full duplex channel, each transmitter/receiver pair may act as a transmitter and a receiver simultaneously.

In a typical configuration, the customer premise equipment includes a device that include two transmitter/receiver pairs. A first transmitter/receiver pair communicates over the WPLN with an upstream transmitter/receiver pair located at the utility substation. A second transmitter/receiver pair communicates with all the end-user equipment located at customer premises. In essence, the second transmitter/receiver pair provides a single point of entry into the customer premise LPLN.

In addition of the physical infrastructure, the power line communication network provides a resource allocation scheme that defines the policies and procedures for inserting and removing devices into and from the power line communication network. These resource allocation schemes are typically based on different policies on the WPLN and the LPLN.

SUMMARY OF THE INVENTION

Briefly stated, the present invention comprises power line communication system for communicating information over a power line grid. The system comprises a first head-end unit and one or more first hybrid units connected to the power line grid. The one or more first hybrid units include a first client-end.unit adapted to communicating with the first head end unit, and a second head-end unit adapted to communicating with one or more second client-end units.

BRIEF DESCRIPTION OF THE DRAWINGS

The foregoing summary, as well as the following detailed description of the preferred embodiments of the invention, will be better understood when read in conjunctions with the appended drawings. For the purpose of illustrating the invention, there are shown in the drawings embodiments that are presently preferred. It should be understood, however, that the invention is not limited to the precise arrangement and instrumentalities shown. In the drawings, like numerals are used to indicate like elements throughout. In the drawings:

FIG. 1 is a graphical illustration of the full-duplex communication channel between a head-end unit and various client-end units.

FIG. 2 is a graphical illustration of a hybrid data transmit and receive unit, which functions as a client-end unit on one sub-network and the head-end unit on another.

FIG. 3. is a flow diagram of device insertion into the power line communication network.

FIG. 4 is a flow diagram of detecting inactive client-end devices.

FIG. 5. is a graphical illustration of a typical power line communication network over AC power lines.

FIG. 6 is a graphical illustration of the frame and packet format used by the power line communication network.

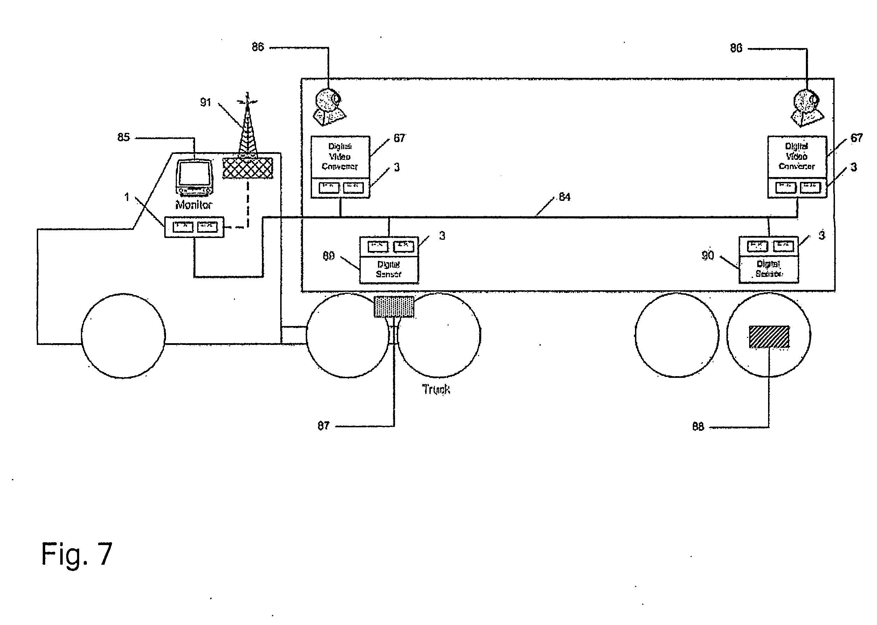

FIG. 7. is a graphical illustration of a typical power line communication network over a DC power line.

DETAILED DESCRIPTION OF THE INVENTION

The present invention describes both the physical and logical characteristics of a power line communication system.

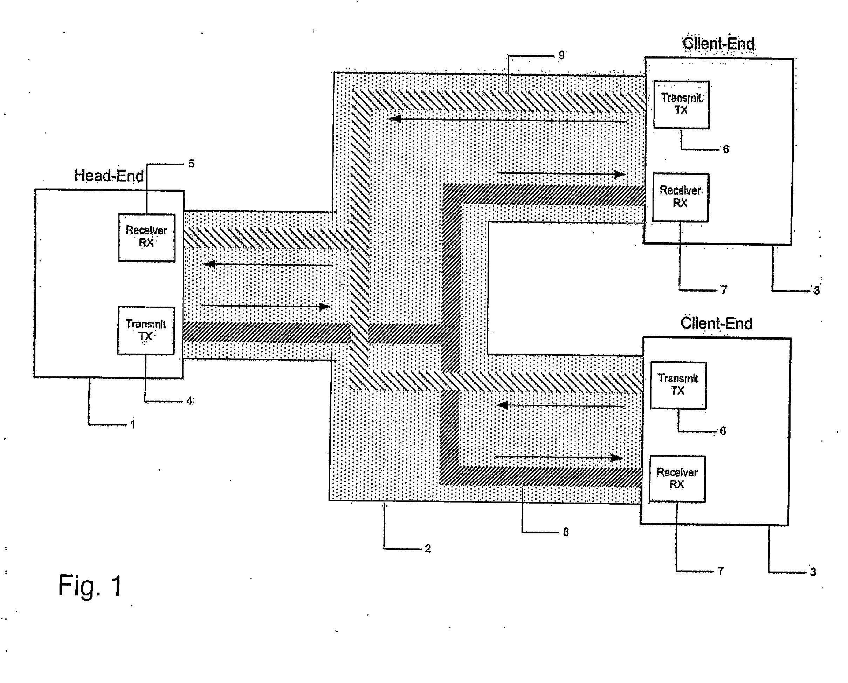

Fig. 1 shows a preferred embodiment of a wide area power line communication network (WPLN) comprising a head-end unit 1, a power line grid 2 and one or more client-end units 3. Although the electrical power grid is typically viewed as a shared bus medium, for the purpose of this invention, based on the nature of the transmission and reception rules, the WPLN is viewed as a point-to-multipoint architecture. At the center of the architecture is the head-end unit 1, which is responsible - among many other things - for supervising access to the resources (i.e. medium access control) for a sub-network. The head-end unit 1 comprises a head-end transmitter module 4 and a head-end receiver module 5, each of which is tuned to different frequency bands, such that the two frequency bands do not overlap, nor do they interfere with one another.

In addition to the head-end unit 1, there is one or more client-end units 3 attached to the WPLN. Although similar in hardware design, the client-end units 3 act as slave devices to the head-end unit 1. Each client-end unit 3, comprises a client-end transmitter 6 and a client-end receiver 7 module, tuned to different frequency bands, such that the two frequency bands do not overlap, nor do they interfere with one another.

From a network topology point of view, there is a logical full duplex communication channel between every client-end unit 3 and an associated head-end unit 1 of the WPLN network. This logical bi-directional communication path is actually composed of two half-duplex channels, one from the head-end unit 1 to each client-end unit 3 (downstream path) 8, and another from each client-end unit 3 to the head-unit 1 (upstream path) 9. These half-duplex channels are implemented by tuning the frequency of the client-end units' receiver module's 7 to the transmit frequency of the head-end unit 1. Similarly, the head-end unit's receiver module 5 is tuned to the exact same frequency as the transmitter module 6 of each of the client-end units 3.

The described dual uni-directional configuration has three advantages. First, the frequency bands in both the downstream and upstream directions are mutually exclusive, unlike typical local area network (LAN) and wide area network (WAN) environments where all the traffic shares the same transmission medium. Therefore the actual total throughput of the WPLN is the sum of the downstream and the upstream communication channel's capacity. Second, given the physical configuration of the network, the downstream communication path is guaranteed to be collision free. This eliminates the need for complex collision.detection algorithms. Third, and perhaps most importantly, this frequency division scheme allows multiple head-end units 1 to be placed on the same physical electrical power line grid 2. However, it is important to observe that whereas these head-end units 1 are physically connected to the same power line grid 2, their transmit and receive frequency bands are mutually exclusive, therefore they are separate sub-networks, each with its own set of client-end units 3. More specifically, each client-end unit 3 generally communicates with only the head-end unit 1 associated with its specific sub-network.. Nevertheless, this property provides virtually limitless bandwidth over the electrical power line grid 2. As long as the transmit and receive frequencies are mutually exclusive and non-interfering, there are no restrictions on the number of logical sub-networks which can be overlaid on the same physical power line grid 2.

Since on any given (logical) power line communication network there is only a single head-unit 1 with a single transmitter module 4, the downstream path is guaranteed to be collision free. The upstream pipe 9, however, is composed of a single head-end receiver 5 with multiple client-end transmitter modules 6, all tuned to the same transmit frequency. If not carefully synchronized, the transmission of one client-end unit 3 could collide with transmissions by other client-end units 3. To avoid collision on the upstream direction, the total upstream transmission epoch is divided into time slots. Preferably, each time slot has an equal transmit duration and may be assigned to no more than one client-end unit 3 at a time. Being assigned one or more time-slots permits the client-end units 3 to transmit in the upstream direction.

The allocation scheme by which client-end units 3 are assigned their individual time slots varies based on the network environment. In the WPLN network, time slot resources are typically assigned based on a pre-defined subscription rate. Since each time slot provides a fixed amount of channel capacity, time slot allocation of WPLNs is based on the amount of premium paid by each end user. In addition, the preferred embodiment uses a dynamic allocation algorithm, in which resources are (re)calculated and (re)assigned each time a new client-end unit is inserted into the network, or an existing client-end unit is deactivated.

In the LPLN, where most of the devices are under the same administrative domain, unless they belong to a different class of service, bandwidth allocation is typically based on an "equal share" policy. In other respects, the WPLN and LPLN operate identically.

Whereas the time slot based transmission scheme can provide collision free communication for all client-end devices 3 registered with the head-end unit 1, the insertion of new devices, which do not yet have resources allocated to them, pose a challenge because these devices have not received any time slot allocation, and therefore, by the rules of the protocol, are not allowed to transmit data. To facilitate registering new client-end units with the head-end unit, one or more time slots may be reserved by the WPLN and LPLN explicitly for new device registration. It is worth noting here, that registration time slots are prone to occasional collisions, when one or more client-end devices 3 send their registration information to the head-end unit 1 at the same time. However, random timeout and backup algorithms can be used to minimize collisions among new client-end units 3.

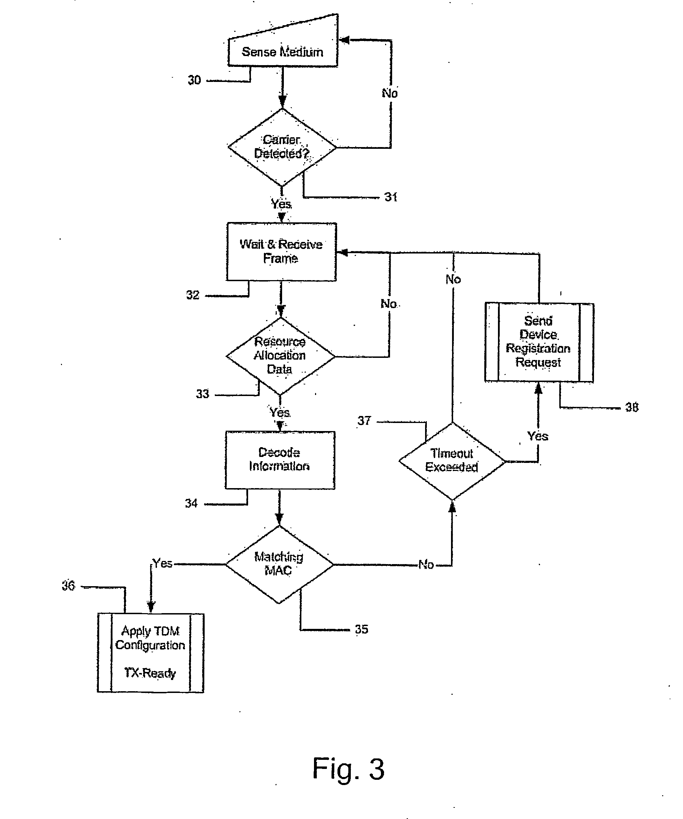

Referring now to Fig. 3, the protocol for new device insertion is shown as follows:
a. the client-end unit 3 continuously monitors 30 the transmission medium, waiting for carrier detection 31;
b. when carrier has been detected, the client-end unit 3 waits for a medium access control (MAC) supervisory packet 32, which contains the broadcasted time slot allocations for all known client-end units 3;
c. upon receiving a MAC supervisory packet, the new client-end unit 3 searches 34 the time slot allocation table for a record that matches its hardware address 35;
d. if a matching record is located, the client-end unit 3 incorporates the time slot allocation record into its memory, and may begin transmitting data in the upstream direction 36. Otherwise if the received MAC supervisory packet does not contain a matching time slot allocation record, the client-unit passively returns to waiting for a new MAC supervisory packet 32, unless the pre-configured timeout expires 37, in which case the client-end unit sends a registration message 38 to the head-end unit 1 over the reserved registration time slots, and passively returns to waiting 32 for a new MAC supervisory packet 32.

It is worth noting here, that the head-end unit 1 may elect to deny the registration request from the client-end unit 3. This is an implicit denial of service, since the head-end unit 1 does not send an acknowledgement downstream to the requesting client-end unit 3. The head-end unit 1 simply does not include a new allocation record in the table of broadcasted time slot allocations.

When a dynamic time slot allocation scheme is used, it is important for the head-end unit 1 to detect when one or more client-end units 3 are inactive, so that the previously allocated time slot resources can be re-assigned to other, active, client-end units.

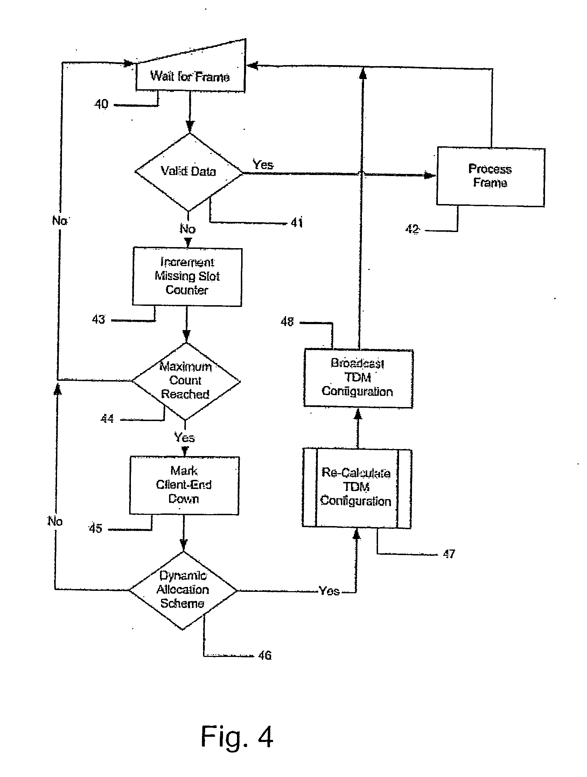

The protocol logic for detecting inactive client-end units 1 is as follows (see Fig. 4):
a. for each upstream time slot; the head-end unit 1 examines the received frame 40 to determine if the transmission contains any valid data 41 (note that client-end units 3 transmit null frames during all their assigned time-slots, even when they have no actual data to transmit);
b. if the time slot does not contain valid data, the missing slot counter is incremented 43 for the client-end device 3 to which the time slot was assigned;
c. if the maximum missing slot count is exceeded, the head-end unit 1 marks the client-end unit as "down" 45, and the client-end unit's resource allocation record is removed 47 from the time slot allocation table broadcast 48 downstream by the head-end unit 1; and
d. if possible, the previously allocated time slots are assigned to other, currently active, client-end units 3.

It is imperative to the correct operation of this scheme that all client-end units 3 use the most up-to-date time slot allocation data sent by the head-end unit 1. Every client-end unit 3 must be ready to receive and update its time slot allocation information based on the MAC supervisory packets broadcast downstream from the head-end unit 1.

The protocol for re-configuring the local time slot allocation information for each client-end unit 3 is as follows:
a. the client-end device 3 continuously monitors the downlink channel for a MAC supervisory packet;
b. if the MAC supervisory packet contains any MAC supervisory information, the client-end unit 3 searches the time allocation table contained in the supervisory packet for a record that matches its own hardware address;
c. if a matching record is found, the time slot allocation record is immediately applied to the client-end unit's local configuration; and
d. if no matching record is found, the client end device immediately ceases transmission, and enters into a reset state.

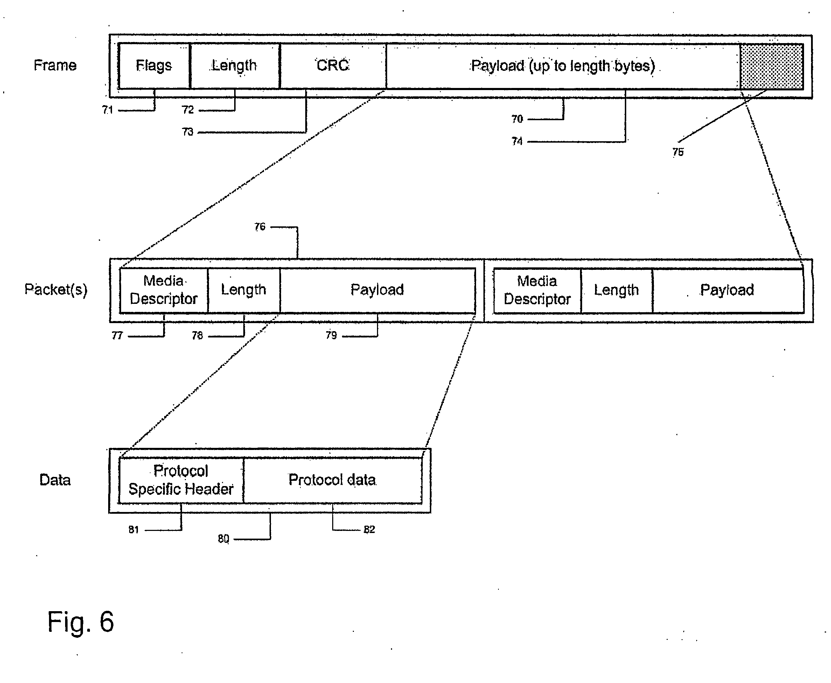

The lowest unit of the digital transmission is a frame 70. The maximum frame size is defined by the time duration of a time slot. Referring to Fig. 6, the frame of the preferred embodiment comprises:
a. a flags field 71 that contains MAC control information including a destination address,
b. a length field 72 that specifies the number of valid octets in a payload
c. a cyclic redundancy check (CRC) field 73 that contains a CRC block calculated over the payload block before transmission,
d. a payload 74, and
e. possibly some unused frame bytes 75.

The payload of each frame contains one or more packets 76.

The packet format 76 of the preferred embodiment is shown in Fig. 6 and is defined as follows:
a. a media descriptor field 77 that is used to classify the type of packet, and
b. a length field 78, which is the number of octets in the payload, following the packet's payload 79.

Typically, the packet payloads 79 contain a protocol specific header 81 and data 82.

The media descriptor field 77 contains information about the type of protocol that was used at the user to network interface (UNI) () to form the packet 76. This allows various forwarding hardware to provide a better quality of service based of the content type carried in the payload 79. For example, one of the pre-defined media descriptor values is used to indicate a MAC supervisory packet.

The advantage of using this format is that it allows the PLC to carry a virtually limitless set of media formats. These include, but not limited to, Internet Protocol (IP) data, automatic meter reading (AMR) information, digitized voice and phone services, digital television signal, digital video and surveillance streams.

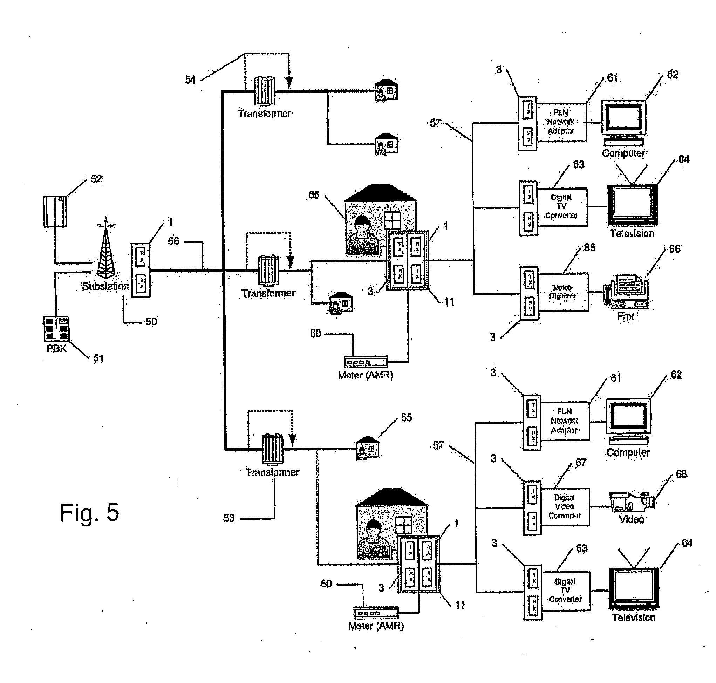

Referring now to Fig. 5, there is shown a diagram of a typical implementation of a PLC. To support one or more of media service types, the head-end unit 1 located at the power line substation 50 is connected to a service provider's uplink. The type of the uplink and the protocol used depends on the type of service being supported. For example, for IP networks, the substation would typically be equipped with a high-speed fiber data uplink 52, such as SONET or Gigabit-Ethernet. Similarly, to support digital phone and voice communication systems, the substation would include a digital interface to a PBX or SS7 switch 51.

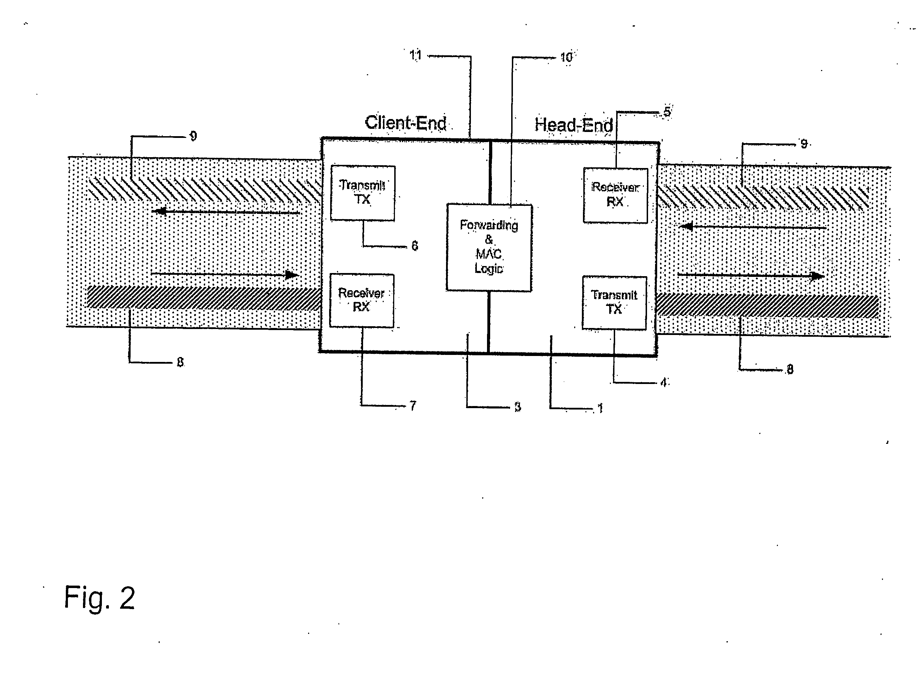

The signal from the uplinks is transmitted over the power line grid 56 from the head-end unit to the client-end units 3 located at each residential or commercial end-user's premises 55. It is worth noting here, that the signals are passed through 54 any transformer 53 located between the substation and the customer premise equipment (CPE) without regeneration. The CPE is actually a hybrid network element 11, (see Fig. 2) which includes a client-end unit 3 for the head-end 1, MAC logic 10, and a head-end unit 1 for the LPLN 57 inside of the customer premise.

The LPLN 57 at the customer premise comprises a single head-end unit 1, which is typically co-located with the power meter and an optional automatic meter reading (AMR) device 60, and one or more client-end units 3. The client-end units 3 contain media-based adapters which enable a large variety of hardware to communicate over the power line communication network. For example, the PLN network adapter 61 allows personal computers 62 (PCs) to be connected to the LPLN 57. Other adapters may include: digital television converters 63, which allow the reception of high-quality digital TV or cable service for television sets 64, voice digitizer and phone interface 65, which provides digital quality voice communication; facsimiles 66, video converters 67, which allow cameras and other surveillance devices 68 to use the power line communication network.

Notwithstanding the example applications described above, the power line communication system described in this application can also be used over DC power lines. One example of this use is in the area of transportation, where various vehicles, such as trucks, automobiles, trains, are equipped with a variety of sensory equipment, such as break 89 and tire pressure 90 sensors for monitoring brakes 87 and tires 88.

The analog signals captured by the sensors are digitized by the sensory input digitizer(s) 89 and 90, and through their associated client end units 3, the digital signal is transmitted over the DC power line 84 toward the head-end unit 1. Similarly, cameras and other image capture equipment may be attached to the vehicles, for example to assist the driver backing up. The analog signal converted by the camera 86 is digitized by the digital video converter unit 67, and its output is transmitted by the client-end unit 3 through the DC power line 84 toward the head-end unit 1. All data is transmitted to a central monitoring and recording unit 85 which is located at the head-end unit. It is foreseeable that the input data collected by the head-end unit 1 may be transmitted to a centralized operation center or other vehicles in the area. This information is typically transmitted over wireless and/or satellite communication channels.

Changes can be made to the embodiments described above without departing from the broad inventive concept thereof. The present invention is thus not limited to the particular embodiments disclosed, but is intended to cover modification within scope of the present invention.

## Claims

1. A communication system for communicating information over a power line grid (2) comprising:
a first head-end unit (1) connected at a distant end to the power line grid (2); and
one or more first hybrid units connected to the power line grid (2) at a customer premises, said one or more hybrid units (11) including;
a first citent-end unit (3) adapted to communicating with the first head-end unit (1), and
a second head-end unit (3) adapted to communicating with the first client-end unit and with one or more second client-end units,
wherein each head-end unit communicates with one or more associated client-end units (3) over (1) a logical half-duplex downstream communication channel, whereby a carrier frequency of the head-end unit's transmitter output is matched by the receive frequency of each of the client-end units associated with the head-end unit (1), and (2) a logical half-duplex upstream communication channel, in which a carrier frequency of each of the client-end unit's transmitter (6) output is matched with the receive frequency of the head-end unit (1), the upstream (9) and downstream (8) channels associated with the head-end unit (1) and the associated ciient-end units (3) forming a sub-network and operating in mutually exclusive frequency bands, and
wherein one or more of the second client-end units (3) also includes a third head-end unit (3), each third head-end unit (3) being adapted to communicate with the one or more second client-end unit (3) and one or more third client-end units (3).

2. The communication system of claim 1, wherein the carrier frequencies of each of the downstream (8) and upstream (9) channels operating on the wide area power line network are mutually exclusive.

3. The communication system of claim 2, wherein the system comprises a plurality of subnets, the frequency bands of the upstream (9) and the downstream (8) channels of the plurality of sub-networks being mutually exclusive.

4. The communication system of claim 1, wherein the bandwidth of the downstream communication channel is substantially identical to the bandwidth of the upstream communication channel.

5. The communication system of claim 1, wherein the upstream (9) and the downstream (8) channels each utilize a frame (70) format comprising:
a flag field (71) including a destination address,
a length field (72), which identifies the number of octets in the payload (74) of the frame,
a media selector field, which identifies the type of payload (74),
a cyclic redundancy check (CRC) field (73), which contains the CRY value calculated over a remaining portion of the frame, and
a payload field including on arbitrary sequence of data.

6. The communication system of claim 5, wherein each client-end unit examines the destination address of the data frame received from the head-unit (1), and (1) if the destination hardware address matches with its own hardware address, the frame (70) is scheduled for processing, and (2) if the hardware address of the client-end unit (3) is not found, the frame (70) is discarded.

7. The communication system of claim 1, wherein each upstream communication channel (9) is divided into one or more time slots.

8. The communication system of claim 7, wherein time slot resources in a head-end are allocated to the associated client-end units (3) by a subscription based allocation scheme, wherein any unallocated resources are temporarily allocated to the associated client-end units (3) with the constraints that the unallocated resources may be revoked at any time, without notice by the head-end unit (1).

9. The communication system of claim 7, wherein every associated client-end device receives an equal share of the time slot resources.

10. The communication system of claim 7, wherein time slot resources are dynamically reassigned when a new client-end unit (3) is inserted into the network or a client-end unit (3) which has been assigned time slot resources is deactivated.

11. The communication system of claim 7, further including a medium access control sub-system within each head-end unit (1), the medium access control sub-system periodically broadcasting a time slot allocation signal in a predetermined one of the time slots, wherein if an individual one of the client-end unit (3) detects the time slot allocation signal having an address of the individual client-end unit (3), the individual client-end unit (3) may transmit in an allocated time slot, and if the individual one of the client-end units does not detect the allocated time slot signal with the address of the individual client-end unit (3), the individual client-end unit may not transmit in the allocated time slot.

12. The communication system of claim 7, further including a medium access control sub-system within each head-end unit (1), the medium access control sub-system periodically providing a registration time slot adapted for receiving registration signals from the client-end units (3), wherein upon receipt of a registration signal from an individual one of the client-end units (3), the medium access control subsystem allocates a time slot to the individual client-end unit (3) by including the address of the individual client-end unit (3) in the next broadcasted time slot allocation signal.

13. The communication system of claim 1, wherein the head-end unit broadcasts identical downstream data (8) to all client-end units (3) on the same logical sub-network.

## Patentansprüche

1. Übertragungssystem zum Übertragen von Information über ein Stromleitungsnetz (2) mit:
einer ersten Kopfendeinheit (1), die an einem entfernten Ende mit dem Stromleitungsnetz (2) verbunden ist, und
einer oder mehreren ersten Hybrideinheiten, die mit dem Stromleitungsnetz (2) an einem Kundenort verbunden sind, wobei die eine oder mehreren Hybrideinheiten (11) umfassen:
eine erste Benutzerendeinheit (3), die so eingerichtet ist, dass sie mit der ersten Kopfendeinheit (1) kommuniziert, und
eine zweite Kopfendeinheit (3), die so eingerichtet ist, dass sie mit der ersten Benutzerendeinheit und mit einer oder mehreren zweiten Benutzerendeinheiten kommuniziert,
wobei jede Kopfendeinheit mit einer oder mehreren dazugehörigen Benutzerendeinheiten (3) kommuniziert über: (1) einen logischen Halbduplexdownstreamübertragungskanal, wobei die Empfangsfrequenz jeder der der Kopfendeinheit (1) zugeordneten Benutzerendeinheiten an eine Trägerfrequenz des Senderausgangs der Kopfendeinheit angepasst ist, und (2) einen logischen Halbduplexupstreamübertragungskanal, in dem eine Trägerfrequenz jedes Sender (6) -ausgangs der Benutzerendeinheiten an die Empfangsfrequenz der Kopfendeinheit (1) angepasst ist, wobei die Upstream- (9) und Downstream (8) -kanäle, die mit der Kopfendeinheit (1) verbunden sind, und die verbundenen Benutzerendeinheiten (3) ein Subnetz bilden und in sich gegenseitig ausschließenden Frequenzbändern arbeiten, und
wobei eine oder mehrere der zweiten Benutzerendeinheiten (3) auch eine dritte Kopfendeinheit (3) aufweist, wobei jede dritte Kopfendeinheit (3) so eingerichtet ist, dass sie mit der einen oder den mehreren zweiten Benutzerendeinheiten (3) und einer oder mehreren dritten Benutzerendeinheiten (3) kommuniziert.

2. Übertragungssystem nach Anspruch 1, wobei die Trägerfrequenzen jedes der Downstream- (8) und Upstream (9) -kanäle, die auf dem Fernbereichsstromleitungsnetz arbeiten, sich gegenseitig ausschließen.

3. Übertragungssystem nach Anspruch 2, wobei das System eine Mehrzahl von Subnetzen aufweist, wobei die Frequenzbänder der Upstream- (9) und der Downstream (8) - kanäle der Mehrzahl von Subnetzen sich gegenseitig ausschließen.

4. Übertragungssystem nach Anspruch 1, wobei die Bandbreite des Downstreamübertragungskanals im Wesentlichen identisch mit der Bandbreite des Upstreamübertragungskanals ist.

5. Übertragungssystem nach Anspruch 1, wobei die Upstream- (9) und die Downstream (8) -kanäle jeder ein Frame (70) -format verwendet, das aufweist:
ein Flag-Feld (71) einschließlich einer Zieladresse,
ein Längenfeld (72), das die Anzahl von Oktetten in der Nutzlast (74) des Frames bezeichnet,
ein Medienauswahlfeld, das den Typ an Nutzlast (74) bezeichnet,
ein zyklisches Redundanzprüf (CRC-) -feld (73), das den CRC-Wert enthält, der für einen verbleibenden Teil des Frames berechnet wurde, und
ein Nutzlastfeld einschließlich einer willkürlichen Datensequenz.

6. Übertragungssystem nach Anspruch 5, wobei jede Benutzerendeinheit die Zieladresse des von der Kopfendeinheit (1) empfangenen Datenframe überprüft und (1) falls die Zielhardwareadresse mit seiner eigenen Hardwareadresse übereinstimmt, der Frame (70) zur Verarbeitung bereitgestellt wird, und (2) falls die Hardwareadresse der Benutzerendeinheit (3) nicht gefunden wird, der Frame (70) verworfen wird.

7. Übertragungssystem nach Anspruch 1, wobei jeder Upstreamübertragungskanal (9) in ein oder mehrere Zeitfenster zerlegt ist.

8. Übertragungssystem nach Anspruch 7, wobei die Zeitfensterressourcen in einem Kopfende den verbundenen Benutzerendeinheiten (3) durch ein teilnehmerbasiertes Zuordnungsschema zugeordnet sind, wobei irgendwelche nicht zugeordneten Ressourcen vorübergehend den verbundenen Benutzerendeinheiten (3) zugeordnet werden, mit der Randbedingung, dass die nicht zugeordneten Ressourcen zu irgendeiner Zeit ohne Benachrichtigung durch die Kopfendeinheit (1) widerrufen werden.

9. Übertragungssystem nach Anspruch 7, wobei jede verbundene Benutzerendeinrichtung einen gleichen Anteil an den Zeitfensterressourcen erhält.

10. Übertragungssystem nach Anspruch 7, wobei die Zeitfensterressourcen dynamisch neu zugeordnet werden, wenn eine neue Benutzerendeinheit (3) in das Netz eingefügt wird oder eine Benutzerendeinheit (3), welcher Zeitfensterressourcen zugeordnet wurden, deaktiviert wird.

11. Übertragungssystem nach Anspruch 7 darüber hinaus mit einem Medienzugriffssteuersubsystem innerhalb jeder Kopfendeinheit (1), wobei das Medienzugriffssteuersubsystem periodisch ein Zeitfensterzuordnungssignal in einem vorbestimmten der Zeitfenster ausstrahlt, wobei wenn eine individuelle der Benutzerendeinheiten (3) erfasst, dass das Zeitfensterzuordnungssignal eine Adresse der individuellen Benutzerendeinheit (3) aufweist, kann die individuelle Benutzereinheit (3) in einem zugeordneten Zeitfenster senden, und wenn die individuelle der Benutzerendeinheiten nicht das zugeordnete Zeitfenstersignal mit der Adresse der individuellen Benutzerendeinheit (3) erfasst, kann die individuelle Benutzerendeinheit nicht in dem zugeordneten Zeitfenster senden.

12. Übertragungssystem nach Anspruch 7 darüber hinaus mit einem Medienzugriffssteuersubsystem innerhalb jeder Kopfendeinheit (1), wobei das Medienzugriffssteuersubsystem periodisch ein Registrierungszeitfenster bereitstellt, das zum Empfangen von Registrierungssignalen von den Benutzerendeinheiten (3) eingerichtet ist, wobei bei Empfang eines Registrierungssignals von einem individuellen der Benutzerendeinheiten (3) das Medienzugriffssteuersubsystem der individuellen Benutzerendeinheit (3) ein Zeitfenster zuordnet durch Einfügen der Adresse der individuellen Benutzerendeinheit (3) in das nächste ausgestrahlte Zeitfensterzuordnungssignal.

13. Übertragungssystem nach Anspruch 1, wobei die Kopfendeinheit identische Downstreamdaten (8) an alle Benutzerendeinheiten (3) über das gleiche logische Subnetz ausstrahlt.

## Revendications

1. Système de communication pour communiquer des informations via un réseau électrique (2) comprenant :
une première unité de tête de réseau (1) connectée, à une extrémité distante, au réseau électrique (2); et
une ou plusieurs premières unités hybrides connectées au réseau électrique (2) chez un client, lesdites une ou plusieurs unités hybrides (11) comprenant :
une première unité côté client (3) conçue pour communiquer avec la première unité de tête de réseau (1), et
une seconde unité de tête de réseau (3) conçue pour communiquer avec la première unité côté client et avec une ou plusieurs secondes unités côté client,
chaque unité de tête de réseau communiquant avec une ou plusieurs unités côté client (3) associées, par l'intermédiaire de : (1) un canal de communication aval semi-duplex logique, une fréquence porteuse de la sortie émetteur de l'unité de tête de réseau étant ainsi accordée sur la fréquence de réception de chacune des unités côté client associées à l'unité de tête de réseau (1), et (2) un canal de communication amont semi-duplex logique, dans lequel une fréquence porteuse de la sortie émetteur (6) de chacune des unités côté client est accordée sur la fréquence de réception de l'unité de tête de réseau (1), les canaux amont (9) et aval (8) associés à l'unité de tête de réseau (1) et les unités côté client (3) associées formant un sous-réseau et fonctionnant dans des bandes de fréquence mutuellement exclusives, et
l'une ou plusieurs des secondes unités côté client (3) comprenant également une troisième unité de tête de réseau (3), chaque troisième unité de tête de réseau (3) étant conçue pour communiquer avec l'une ou plusieurs des secondes unités côté client (3) et l'une ou plusieurs des troisièmes unités côté client (3).

2. Système de communication selon la revendication 1, dans lequel les fréquences porteuses de chacun des canaux aval (8) et amont (9) fonctionnant sur le réseau électrique étendu sont mutuellement exclusives.

3. Système de communication selon la revendication 2, dans lequel le système comprend une pluralité de sous-réseaux, les bandes de fréquence des canaux amont (9) et aval (8) de la pluralité de sous-réseaux tant mutuellement exclusives.

4. Système de communication selon la revendication 1, dans lequel la bande passante du canal de communication aval est sensiblement identique à la bande passante du canal de communication amont.

5. Système de communication selon la revendication 1, dans lequel les canaux amont (9) et aval (8) utilisent chacun un format de trame (70) comprenant :
un champ drapeau (71) incluant une adresse de destination,
un champ de longueur (72) qui identifie le nombre d'octets dans la charge utile (74) de la trame,
un champ sélecteur de support qui identifie le type de charge utile (74),
un champ de contrôle de redondance cyclique (CRC) (73) qui contient la valeur CRC calculée sur une partie restante de la trame, et
un champ de charge utile incluant une séquence arbitraire de données.

6. Système de communication selon la revendication 5, dans lequel chaque unité côté client examine l'adresse de destination de la trame de données reçue de l'unité de tête de réseau (1), et (1) si l'adresse physique de destination correspond à sa propre adresse physique, la trame (70) est programmée pour traitement, et (2) si l'adresse physique de l'unité côté client (3) n'est pas trouvée, la trame (70) est ignorée.

7. Système de communication selon la revendication 1, dans lequel chaque canal de communication amont (9) est divisé en un ou plusieurs créneaux temporels.

8. Système de communication selon la revendication 7, dans lequel les ressources en créneaux temporels dans une tête de réseau sont attribuées aux unités côté client (3) associées par un schéma de répartition basé sur l'abonnement, toutes ressources non attribuées étant temporairement allouées aux unités côté client (3) associées, avec la contrainte suivante : les ressources non attribuées peuvent être révoquées à tout moment et sans préavis par l'unité de tête de réseau (1).

9. Système de communication selon la revendication 7, dans lequel chaque dispositif côté client associé reçoit une part égale des ressources en créneaux temporels.

10. Système de communication selon la revendication 7, dans lequel les ressources en créneaux temporels sont dynamiquement réattribuées lorsqu'une nouvelle unité côté client (3) est insérée dans le réseau ou lorsqu'une unité côté client (3) à laquelle ont été attribuées des ressources en créneaux temporels est désactivée.

11. Système de communication selon la revendication 7, comprenant, en outre, un sous-système de commande d'accès au support à l'intérieur de chaque unité de tête de réseau (1), le sous-système de commande d'accès au support diffusant périodiquement un signal d'attribution de créneau temporel dans l'un prédéterminé des créneaux temporels, auquel cas, si une unité côté client (3) individuelle détecte le signal d'attribution de créneau temporel ayant une adresse de l'unité côté client (3) individuelle, l'unité côté client (3) individuelle peut émettre dans un créneau temporel attribué, et si l'unité côté client (3) individuelle ne détecte pas le signal de créneau temporel attribué ayant l'adresse de l'unité côté client (3) individuelle, l'unité côté client (3) individuelle ne peut pas émettre dans le créneau temporel attribué.

12. Système de communication selon la revendication 7, comprenant, en outre, un sous-système de commande d'accès au support à l'intérieur de chaque unité de tête de réseau (1), le sous-système de commande d'accès au support fournissant périodiquement un créneau temporel d'enregistrement conçu pour recevoir des signaux d'enregistrement des unités côté client (3), le sous-système de commande d'accès au support attribuant, à la réception d'un signal d'enregistrement d'une unité côté client (3) individuelle, un créneau temporel à l'unité côté client (3) individuelle en incluant l'adresse de l'unité côté client (3) individuelle dans le signal diffusé suivant d'attribution de créneau temporel.

13. Système de communication selon la revendication 1, dans lequel l'unité de tête de réseau diffuse des données aval (8) identiques à toutes les unités côté client (3) sur le même sous-réseau logique.
